# EUROPEAN PATENT APPLICATION

(11) **EP 4 496 153 A1**
(43) Date of publication of application: **22.01.2025**
(21) Application number: 23769783.4
(22) Date of filing: 14.03.2023
(51) Int. Cl.: H01R 31/06, H01R 13/58, H01B 7/00, B60R 16/02

(54) **ELECTRIC ENERGY TRANSMISSION ASSEMBLY AND VEHICLE**

(30) Priority: 14.03.2022 CN 202220552546 U
(71) Applicant: Jilin Zhong Ying High Technology Co., Ltd., Jilin 130028 (CN)
(72) Inventor: WANG, Chao, Changchun, Jilin 130028 (CN)
(74) Representative: Boult Wade Tennant LLP
(86) International application number: PCT/CN2023/081364
(87) International publication number: WO 2023/174281

(57) **Abstract**

The present disclosure discloses an electric energy transmission assembly and a vehicle, including at least one electric connection skeleton and connectors provided at two ends of the electric connection skeleton. The connector includes a connecting terminal, the two ends of the electric connection skeleton are electrically connected to the connecting terminals, each electric connection skeleton includes at least two different shapes of cross sections, the electric connection skeleton is sleeved with an insulating layer, and the insulating layer covers an outside of the electric connection skeleton. The structure is simple, the cost is reduced, and the installation efficiency is improved.

## Description

The present disclosure claims priority to Chinese Patent Application No. 2022205525468, entitled "Electric Energy Transmission Assembly and Vehicle", and filed on March 14, 2022, which is hereby incorporated by reference in its entirety.

### TECHNICAL FIELD

The present disclosure relates to the field of electric energy transmission, and particularly to an electric energy transmission assembly and a vehicle.

### BACKGROUND

With the continuous upgrading and improvement of electric vehicles, due to the diversification of car models and devices, the requirements in terms of the installation position and installation direction of the connector cables are also different and the functional requirements are increased. Therefore, the connector cables installed on the devices will be more and more, which is bound to occupy a lot of space, and the arrangement of cables must also be adjusted at any time.

In vehicles such as electric vehicles and hybrid vehicles, high-voltage wire harness is adopted for electrical connections between electric components, such as the battery, inverter, engine, etc.

Due to the structural limitations of the current connector cables, it may be difficult to place high-voltage wire harness in the narrow paths. Therefore, there is an urgent need of an electric energy transmission assembly that is suitable for various installation environments to solve the above-mentioned problem.

### SUMMARY

An object of the present disclosure is to provide a new technical solution of an electric energy transmission assembly and an electric vehicle.

The present disclosure provides an electric energy transmission assembly, including at least one electric connection skeleton and connectors provided at two ends of the electric connection skeleton. The connector includes a connecting terminal, the two ends of the electric connection skeleton are electrically connected to the connecting terminals, the electric connection skeleton includes at least two different shapes of cross sections, the electric connection skeleton is sleeved with an insulating layer, and the insulating layer covers an outside of the electric connection skeleton.

A material of the connecting terminal is copper or a copper alloy, and a material of the electric connection skeleton is pure aluminum or an aluminum alloy with an aluminum content of 90% or above.

The electric connection skeleton is connected with the connecting terminal in a welding or crimping manner.

The electric connection skeleton is a rigid body, and a tensile strength of the electric connection skeleton is higher than 75MPa.

A cross section of the electric connection skeleton is in one or more selected from a circular shape, an oval shape, a rectangular shape, a polygonal shape, an A shape, a B shape, a D shape, an M shape, an N shape, an O shape, an S shape, a P shape, an E shape, an F shape, an H shape, a K shape, an L shape, a T shape, a U shape, a V shape, a W shape, an X shape, a Y shape, a Z shape, a semi-arc shape, an arc shape, and a wavy shape.

the electric energy transmission assembly further includes a transition connection section that transitionally connects two different shapes of cross sections of each electric connection skeleton.

The electric connection skeleton comprises at least one bent portion, and the transition connection section is located in the bent portion.

A difference in cross sectional area between each two different shapes of cross sections of the electric connection skeleton is not more than 20%.

The electric connection skeleton at least includes a first conductor core section and a second conductor core section, and a cross section of the first conductor core section is different from a cross section of the second conductor core section.

The first conductor core section is sleeved with a first insulating layer, the second conductor core is sleeved with a second insulating layer, and the first insulating layer and the second insulating layer are connected in a fusion or welding or foaming or injection molding or bonding or spraying or plastic dipping manner.

The first conductor core section and the second conductor core section are connected in a welding or crimping manner.

A difference in cross sectional area between the first conductor core section and the second conductor core section is not more than 20%.

At least one of the first conductor core section and the second conductor core section is made of pure aluminum or an aluminum alloy with an aluminum content of 90% or above.

The cross section of the electric connection skeleton is a polygonal shape, and all the corners of the polygonal shape are chamfered or rounded.

A cross sectional area of the electric connection skeleton is 3.5mm² to 240mm².

At least a portion of the electric connection skeleton is flexible.

The insulating layer is further sequentially sleeved with a shielding layer and an outer insulating layer.

One of the connectors is a charging socket.

The present disclosure also provides a vehicle, including a vehicle body, an electric device and an electric energy transmission assembly as described above. The electric energy transmission assembly is detachably fixed to the vehicle body or the electric device, and the electric connection skeleton is arranged and fixed along a contour of the vehicle body.

A distance from the electric connection skeleton to the vehicle body is greater than or equal to 4.6mm.

The present disclosure has the following technical effects:
1. Due to the use of the electric energy transmission assembly, when a narrow space is encountered during vehicle wiring, the design of this structure can better adapt to the wiring path of the vehicle without changing the electric energy transmission effect, so that the cost is effectively reduced, the structure is simplified, and the installation efficiency is improved.
2. The cross sections of the electric connection skeleton is set in various shapes, the electric connection skeleton is applicable to different installation environments, and is more matched with the vehicle body.
3. The transition connection section allows for smooth connections between the various cross sections of the electric connection skeleton, and the reduction in the life time of the electric connection skeleton due to stress concentration if avoided.
4. The different cross sections adopt different cross sectional areas, so that the current conducted through each cross section of the electric connection skeleton is the same, and the electric energy transmission function of the electric connection skeleton is ensured.
5. The electric connection skeleton is also provided with a flexible portion and a bent portion, and the structure of the connector assembly can be reasonably designed according to the installation environment of the vehicle body, so that the installation of the connector assembly on the vehicle body is easier and the assembly time is saved.

The other features and advantages of the present disclosure will become clear by the following detailed descriptions of the embodiments of the present disclosure with reference to the drawings.

### BRIEF DESCRIPTION OF THE DRAWINGS

Drawings incorporated in the specification and constituting a portion of the specification show embodiments of the present disclosure, and are used for explaining principles of the present disclosure together with the explanations thereof.
FIG. 1 is a structural diagram of the connector assembly according to the present disclosure;
FIG. 2 is a structural diagram of the electric connection skeleton according to the present disclosure;
FIG. 3 is a section view of the electric connection skeleton according to the present disclosure;
FIG. 4 is a section view of the electric connection skeleton along line A-A in FIG. 3 according to the present disclosure;
FIG. 5 is a sectional view of the electric connection skeleton along line B-B in FIG. 3 according to the present disclosure.

In the drawings, the reference numerals are as follows:
1. Connector; 2. Electric connection skeleton; 3. Insulating layer; 4. Connecting terminal; 21. First conductor core section; 22. Second conductor core section; 23. Transition connection section; 31. Shielding layer; 32. Outer insulating layer.

### DESCRIPTION OF THE EMBODIMENTS

Various embodiments of the present disclosure will now be described in detail with reference to the drawings. It should be noted that, unless otherwise specified, the relative arrangements, numerical expressions and numerical values of the parts and steps set forth in these embodiments do not limit the scope of the present disclosure.

The following description of at least one embodiment in fact is illustrative only and in no way constitutes any limitation on the present disclosure and its application or use.

The techniques, methods and devices known to those of ordinary skill in the relevant art may not be discussed in detail, but in suitable situations, the techniques, methods and devices shall be regarded as a part of the Description.

In all the examples shown and discussed here, any specific values should be interpreted as merely exemplary, rather than as limitations. Therefore, other exemplary embodiments may have different values.

This embodiment provides an electric energy transmission assembly, including at least one electric connection skeleton 2 and connectors 1 provided at two ends of the electric connection skeleton 2. The connector 1 includes a connecting terminal 4, the two ends of the electric connection skeleton 2 are electrically connected to the connecting terminals 4, the electric connection skeleton 2 includes at least two different shapes of cross sections, the electric connection skeleton 2 is sleeved with an insulating layer 3, and the insulating layer 3 covers an outside of the electric connection skeleton 2.

The electric connection skeleton 2 is composed of at least two conductors with different cross sections. The insulating layer 3 covers the outside of the electric connection skeleton 2. When a narrow space is encountered during wiring, the design of this structure can better adapt to the wiring path of the vehicle without changing the electric energy transmission effect.

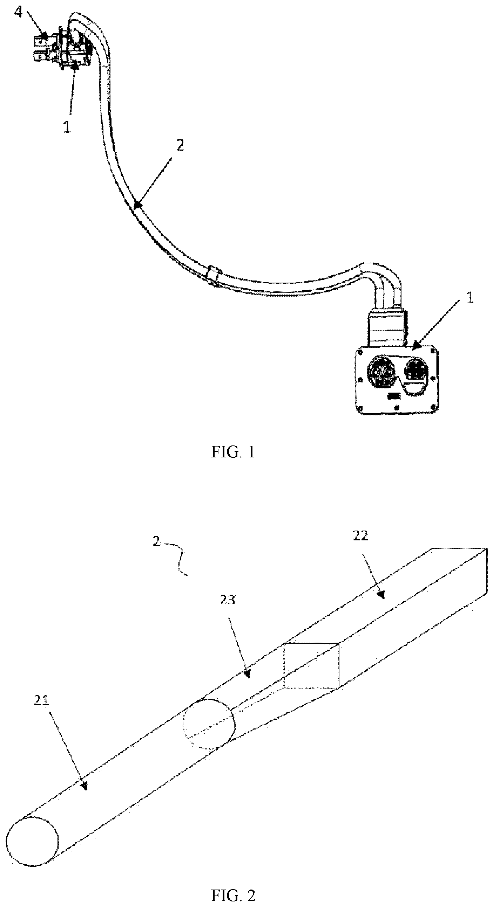

As shown in FIG. 1, in a specific embodiment, the electric connection skeleton 2 includes two different shapes of cross sections, and the two structures may be an integrally formed structure. Compared with the traditional method of using two different wires for transfer, this structure effectively reduces the cost and improves the installation efficiency.

The material of the insulating layer 3 is PVC (Polyvinyl chloride), which on the one hand guarantees the insulation performance and on the other hand has certain water resistance, wear resistance and hardness. The insulating material for the cables may also be one or more selected from rubber, TPE (Thermoplastic Elastomers), XPE, PP (Polypropylene), XLPE (Crosslinked Polyethylene), FEP (Fluorinated Ethylene Propylene), ETFE (Ethylene-Tetra-Fluoro-Ethlene), TPR (Thermo-Plastic-Rubber), and TPFE (Polytetrafluoroethylene).

In a specific embodiment, the material of the connecting terminal 4 is copper or a copper alloy, and the material of the electric connection skeleton 2 is pure aluminum or an aluminum alloy with an aluminum content of 90% or above.

Copper or copper alloy has good conductivity and plasticity, and are one of the preferred choices for the fabrication of conductive material. The connecting terminal 4 undergoes frequent plugging and unplugging with the opposite terminal, so a copper material with good conductivity should be selected, which can prolong the service life of the connecting terminal 4.

The conductivity of aluminum is second only to copper, the aluminum resource storage is large, and the price of aluminum is low, so it has become one of the main material to replace copper cable.

The greater the electrode potential difference between metals is, the more serious the electrochemical corrosion is. The electrode potential difference between the connecting terminal 4 and the electric connection skeleton 2 is very large, so electrical corrosion occurs very quickly, which reduces the service life of the connecting terminal 4 and the electric connection skeleton 2. By adding a metal with an electrode potential between copper and aluminum as an intermediate metal layer between the connecting terminal 4 and the electric connection skeleton 2, the electrical corrosion can be slowed down, thereby prolonging the service life of the electric energy transmission assembly.

In a specific embodiment, the electric connection skeleton 2 is connected with the connecting terminal 4 in a welding or crimping manner.

The metal inertness of copper is greater than that of aluminum, and the electrode potential difference between copper and aluminum is 1.9997V. An electrochemical reaction will occur after the two metals are connected and energized, and as a result, the aluminum wire will be gradually oxidized, which will reduce the mechanical strength and conductivity of the aluminum wire. Welding can be adopted to realize the connection of different types of materials, and since the materials at the contact position are fused, the conduction effect is better.

The specific connecting method is one or more selected from selected from a resistance welding manner, a friction welding manner, an ultrasonic welding manner, an arc welding manner, a laser welding manner, an electron beam welding manner, a pressure diffusion welding manner, a magnetic induction welding manner, and a crimping manner.

Resistance welding refers to a method of using a strong current to pass through a contact point between an electrode and a workpiece and generating heat by the contact resistance to realize welding.

Friction welding refers to a method of using the heat generated by friction at the contact face of the workpieces as a heat source to make the workpieces plastically deformed under the action of pressure to realize welding.

Ultrasonic welding is a method in which high-frequency vibration waves are transferred to the surfaces of the two objects to be welded, and under pressurization, the surfaces of the two objects rub against each other to achieve fusion between two molecular layers.

Arc welding is a method in which an electric arc is used as a heat source, and the electrical energy is converted into the thermal and mechanical energy required for welding by using the physical phenomenon of air discharge, thereby achieving the goal of metal connection. The method mainly includes shielded metal arc welding, submerged arc welding, gas shielded welding, etc.

Laser welding is an efficient and precise welding method that takes a laser beam with high energy density as a heat source.

Electron beam welding is a method to realize welding by bombarding the welding face placed in a vacuum or non-vacuum environment with an accelerated and focused electron beam to cause the workpieces to be welded to melt and fuse.

Pressure welding is a method of applying pressure to the parts to be welded to make the junction faces close contact to produce certain plastic deformation to complete the welding.

Diffusion welding refers to a solid welding method in which the workpieces are pressurized at high temperature without producing visible deformation and relative movement.

Magnetic induction welding is a method in which the two workpieces to be welded produce an instantaneous high-speed collision under the action of a strong pulsed magnetic field, surface layers of materials are subjected to high pressure waves, and thus atoms of the two materials meet within the atomic spacing, thereby forming stable metallurgical bonding on an interface. It is a kind of solid-state cold welding that can weld together conductive metals with similar or dissimilar properties.

Crimping is a production process in which the electric connection skeleton 2 and the connecting terminals 4 are stamped into a whole by using a crimping machine after assembly. The advantage of crimping lies in mass production, and the use of an automatic crimping machine makes it possible to quickly manufacture large quantities of products of stable quality.

Regarding the specific welding or crimping method, an appropriate connection method or combination of connection methods is selected according to the actual state of the electric connection skeleton 2 and the connecting terminal 4, so as to realize effective electrical connection.

In a specific embodiment, the electric connection skeleton 2 is a rigid body, and a tensile strength of the electric connection skeleton 2 is higher 75MPa.

A rigid body refers to an object whose shape and size do not change and within which the relative position of each point does not change during motion and after being acted upon by a force. An absolutely rigid body does not actually exist, but is only an ideal model, because any object would be more or less deformed after being acted upon by a force. If the degree of deformation is extremely small relative to the geometric size of the object itself, the deformation can be ignored in the study of the movement of the object. Thus, during use of the electric connection skeleton 2 made of a rigid body material, the amount of deformation produced is so small that it can be ignored, and the greater the tensile strength of the rigid body is, the smaller the amount of deformation is.

In order to verify the influence of the tensile strength of the electric connection skeleton 2 on the tensile value when the electric connection skeleton 2 being pulled apart, the torque when being bent, and whether abnormal sound is produced during vibration, the inventor selected electric connection skeleton 2 samples of the same sizes and the same specifications and with different tensile strengths, and carried out tests to measure the tensile value when the electric connection skeleton 2 being pulled apart, the torque when being bent and the abnormal sound produced during vibration.

A method for testing the tensile value of the electric connection skeleton 2 is as follows: A universal tensile test machine is used. The two ends of the electric connection skeleton 2 are respectively fixed to a tensile jigs of the universal tensile test machine and stretching at a speed of 50mm/min, and the tensile value when the electric connection skeleton 2 finally being pulled apart is recorded. In this embodiment, a tensile value greater than 1600N is a qualified value.

A method for testing the torque of the electric connection skeleton 2 is as follows: A torque tester is used. The electric connection skeletons 2 are bent 90° at the same radius and the same speed, and the torque values of deformation of the electric connection skeletons 2 in the bending process are measured. In this embodiment, a torque value less than 60N•m is an exemplary value.

As regards whether the electric connection skeleton 2 has abnormal sounds, the test method that the electric connection skeleton 2 samples with the same sizes and the same specifications and with different tensile strengths and the connectors 1 with the same dimensions are selected, assembled together and fixed on a vibration test platform, and observe whether the electric connection skeletons 2 have abnormal sounds during the vibration test.

**Table 1: Influence of different tensile strength on the torque value and abnormal sounds of the electric connection skeleton 2**

| Different tensile strength (MPa) | | | | | | | | | | | |
|---|---|---|---|---|---|---|---|---|---|---|---|
| 60 | 70 | 75 | 85 | 120 | 200 | 280 | 330 | 380 | 430 | 480 | 500 |

| Tensile value of electric connection skeleton 1 when being pulled apart (N) | | | | | | | | | | | |
|---|---|---|---|---|---|---|---|---|---|---|---|
| 1422 | 1587 | 1668 | 1709 | 1759 | 1815 | 1856 | 1909 | 1950 | 1989 | 2040 | 2067 |

| Torque value when being bent in horizontal direction (N•m) | | | | | | | | | | | |
|---|---|---|---|---|---|---|---|---|---|---|---|
| 6 | 8 | 9 | 18 | 27 | 34 | 44 | 46 | 49 | 52 | 59 | 70 |

| Whether the electric connection skeleton 2 has abnormal sounds | | | | | | | | | | | |
|---|---|---|---|---|---|---|---|---|---|---|---|
| Yes | Yes | No | No | No | No | No | No | No | No | No | No |

From Table 1 it can be seen that when the tensile strength of the electric connection skeleton 2 is less than 75MPa, the tensile value of the electric connection skeleton 2 when the being pulled apart is less than 1600N. In this case, the strength of the electric connection skeleton 2 itself is not high and it breaks easily when being acted upon by a small external force, resulting in a functional failure of the electric connection skeleton 2, and consequently the purpose of electric energy transmission cannot be achieved.

On the other hand, the greater the tensile strength value of the electric connection skeleton 2 is, the less likely the electric connection skeleton 2 is to be deformed, and accordingly the less likely the electric connection skeleton 2 is to have abnormal sounds caused by vibration relative to the connectors 1 connected to its two ends during the vibration test. On the contrary, the smaller the tensile strength value of the electric connection skeleton 2 is, the more likely the electric connection skeleton 2 is to be deformed, and accordingly the more likely the electric connection skeleton 2 is to have abnormal sounds caused by vibration relative to the connectors 1 connected to its two ends during the vibration test. From the above Table 1, it can be seen that when the tensile strength of the electric connection skeleton 2 is less than or equal to 75MPa, the electric connection skeleton 2 will have abnormal sounds during the vibration test. Therefore, the inventor exemplarily selects the tensile strength of the electric connection skeleton 2 to be higher than 75MPa.

Also, it can be seen from Table 1 that when the tensile strength of the electric connection skeleton 2 is greater than 480MPa, the torque value of the electric connection skeleton 2 when being bent by 90° is greater than 60N•m, and then the electric connection skeleton 2 is not bent easily. Therefore, the inventor further exemplarily selects the tensile strength of the electric connection skeleton 2 to be higher than 75MPa and lower than or equal to 480MPa.

In a specific embodiment, the cross section of the electric connection skeleton 2 s in one or more selected from a circular shape, an oval shape, an A shape, a B shape, a D shape, an M shape, an N shape, an O shape, an S shape, a P shape, a rectangular shape, a polygonal shape, an E shape, an F shape, an H shape, a K shape, an L shape, a T shape, a U shape, a V shape, a W shape, an X shape, a Y shape, a Z shape, a semi-arc shape, an arc shape, and a wavy shape.

To be specific, a portion of the cross section of the electric connection skeleton 2 is a circular structure and other portion is an oval structure. An insulating layer 3 covers the outside of the electric connection skeleton 2. The electric connection skeleton 2 is in particular a large-diameter rod-like conductor. When a narrow space is encountered during wiring, the design of this structure can better adapt to the wiring path of the vehicle without changing the electric energy transmission effect. The design in this solution effectively reduces the cost, allows for better matching with the contour of the vehicle body, simplifies the wiring process, reduces the wiring consumables, and improves the installation efficiency. More specifically, as shown in FIG. 2, the cross sections of the electric connection skeleton 2 are respectively a circular shape and a rectangular shape.

In a specific embodiment, the electric energy transmission assembly also includes a transition connection section 23 that transitionally connects two different shapes of cross sections of each electric connection skeleton 2.

As shown in FIG. 2, by respectively connecting the transition connection section 23 with two electric connection skeletons 2 with different cross sections that need to be connected, it is possible to solve the problem that two electric connection skeletons 2 cannot be directly connected due to the different cross sections, and therefore the connection efficiency can be improved. The transition connection section can play a transition role for different cross sections and different cross sectional areas. For example, if the cross sectional areas of two portions of the electric connection skeleton 2 are respectively 3.5mm² and 3.6mm², then the area of the first end of the transition connection section 23 is 3.5mm² and the area of the second end of the transition connection section 23 is 3.6mm². The first end and the second end are connected with two ends of the electric connection skeleton 2, respectively, and the cross sectional area gradually increases from the first end to the second end. In this way, a smooth transition between the two ends of the electric connection skeleton 2 is achieved.

In a specific embodiment, the electric connection skeleton 2 includes at least one bent portion, and the transition connection section is located in the bent portion. In order to adapt to the arrangement of the vehicle body, the electric connection skeleton 2 includes a bent portion. In order to ensure a better connection between the bent portion and two electric connection skeletons 2 with different cross sections, the transition section is arranged at the bent portion.

In a specific embodiment, a difference in cross sectional area between each two different shapes of cross sections of the electric connection skeleton 2 is not more than 20%.

Cross sectional areas of all sections of a common electrically conductive cable are required to be the same, so that the same current can be conducted. However, for electric connection skeletons 2 with cross sections in different shapes being connected to each other, due to the different cross sectional areas of cavities in the sections in the different shapes, the cross sectional areas of the electric connection skeletons 2 in different shapes are not the same. For example, for a multi-core electric connection skeleton 2 and a solid electric connection skeleton 2, since there is a gap between the wire cores of the multi-core electric connection skeleton 2, the cross sectional area of the multi-core electric connection skeleton 2 is greater than that of the solid electric connection skeleton 2 when the conducted current is the same.

In order to guarantee the conductivity of the electric connection skeletons 2 and conveniently arrange the electric connection skeletons 2 on the vehicle body, the difference in cross sectional area between the electric connection skeletons 2 with different shapes cannot be too large, otherwise it will be difficult to install the electric connection skeleton 2 with a larger cross sectional area on the vehicle body, and it will even interfere with the other parts on the vehicle body to produce abnormal sound. As has been verified by the inventor through a plurality of times of experiments, it is optimal that a difference in cross sectional area between each two different shapes of cross sections of the electric connection skeleton 2 is not more than 20%, which does not affect the installation of the electric connection skeleton 2 on the vehicle body. Therefore, when selecting the cross sections of the electric connection skeleton 2, the cross sections which differ greatly in shape or in the size of the cavity cannot be selected.

In a specific embodiment, the electric connection skeleton 2 at least includes a first conductor core section 21 and a second conductor core section 22, and a cross section of the first conductor core section 21 is different from a cross section of the second conductor core section 22.

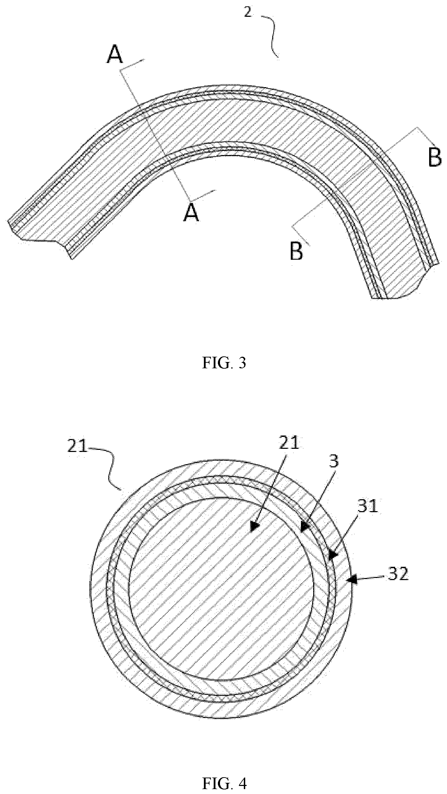

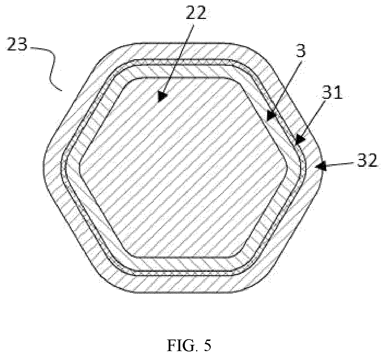

The electric connection skeleton 2 is at least formed by a first conductor core section 21 and a second conductor core section 22 connected together. As shown in FIGS. 3 to 5, the cross section of the first conductor core section 21 is circular and the cross section of the second conductor core section 22 is hexagonal, and a lower end of the rear end of the first conductor core section 21 is connected with an upper end of the front end of the second conductor core section 22. The connection can be specifically realized by welding, exemplarily by ultrasonic welding. According to the situation of actual use, the electric connection skeleton 2 may also be composed of three or more conductor core sections with different cross sections that are connected.

The first conductor core section 21 is sleeved with a first insulating layer, the second conductor core section 22 is sleeved with a second insulating layer, and the first insulating layer and the second insulating layer are connected in a fusion or welding or foaming or injection molding or bonding or spraying or plastic dipping manner. The first insulating layer and the second insulating layer can form a complete insulating layer 3, so that the entire electric connection skeleton 2 is insulated from the outside.

In a specific embodiment, the first conductor core section 21 and the second conductor core section 22 are connected in a welding or crimping manner.

As shown in FIG. 3, the first conductor core section 21 and the second conductor core section 22 are connected in the welding or crimping manner, which may be one or more selected from a resistance welding manner, a friction welding manner, an ultrasonic welding manner, an arc welding manner, a laser welding manner, an electron beam welding manner, a pressure diffusion welding manner, a magnetic induction welding manner, and a crimping manner.

In a specific embodiment, the difference in cross sectional area between the first conductor core section 21 and the second conductor core section 22 is not more than 20%.

Cross sectional areas of all sections of a common electrically conductive cable are required to be the same, so that the same current can be conducted. However, for the first conductor core section 21 and the second conductor core section 22, since the cross sectional areas of the cavities in the cross sections of different shapes are different, the cross sectional areas of the first conductor core section 21 and the second conductor core section 22 are not the same. For example, the first conductor core section 21 is a multi-core structure and the second conductor core section 22 is a solid structure. Since there is a gap between the wire cores of the first conductor core section 21 that is a multi-core structure, when the conducted current is the same, the cross sectional area of the multi-core first conductor core section 21 is greater than that of the second conductor core section 22 that is a solid structure.

In order to guarantee the conductivity of the electric connection skeleton 2 and conveniently arrange the electric connection skeleton 2 on the vehicle body, the difference in cross sectional area between the first conductor core section 21 and the second conductor core section 22 cannot be too large, otherwise it will be difficult to install the first conductor core section 21 with a larger cross sectional area or the second conductor core section 22 with a larger cross sectional area on the vehicle body, and it will even interfere with the other parts on the vehicle body to produce abnormal sound. Meanwhile, there are situations that the difference in cross sectional area between the first conductor core section 21 and the second conductor core section 22 is too large, and insufficient conductivity is prone to occur. In this regard, the inventor carried out relevant tests. The test method is to select electric connection skeletons 22, and each of the connection skeleton 22 is composed of a first conductor core section 21 and a second conductor core section 22 with different cross sectional areas; and measure the conductivity of each electric connection skeleton 2. The test results are shown in Table 2. In this embodiment, an absolute value of the difference in cross sectional area between the first conductor core section 21 and the second conductor core section 22 is taken, and a ratio of the absolute value to the cross sectional area of the first conductor core section 21 is calculated. The conductivity of the electric connection skeletons 2 with different ratios is recorded. If the conductivity is greater than 99%, it is an ideal value.

**Table 2: Influence of the ratio on conductivity**

| Ratio (%) | | | | | | | | | | | | | | |
|---|---|---|---|---|---|---|---|---|---|---|---|---|---|---|
| 0 | 0.5 | 1 | 1.5 | 2 | 3 | 5 | 7 | 10 | 13 | 16 | 18 | 20 | 21 | 22 |

| Conductivity (%) | | | | | | | | | | | | | | |
|---|---|---|---|---|---|---|---|---|---|---|---|---|---|---|
| 99.9 | 99.9 | 99.8 | 99.7 | 99.7 | 99.6 | 99.5 | 99.4 | 99.3 | 99.3 | 99.2 | 99.1 | 99.0 | 98.9 | 98.8 |

From Table 2, it can be seen that when the difference in cross sectional area between the first conductor core section 21 and the second conductor core section 22 is greater than 20%, the conductivity of the electric connection skeleton 2 is lower than the ideal value 99.0%. Therefore, the inventor selects that the cross sectional areas of the first conductor core section 21 and the second conductor core section 22 differ no more than 20%.

It has been verified by the inventor through a plurality of times of experiments that the difference in cross sectional area between the first conductor core section 21 and the second conductor core section 22 being no more than 20% is optimal, which does not affect the installation of the electric connection skeleton 2 on the vehicle body. Therefore, when selecting the cross sections of the first conductor core section 21 and the second conductor core section 22, the cross sections which differ greatly in shape or in the size of the cavity cannot be selected. In order to select a suitable ratio between the cross sectional area of the first conductor core section 21 and the cross sectional area of the second conductor core section 22, the inventor carried out relevant tests. The test method is to select different electric connection skeletons 2, each having a first conductor core section 21 and a second conductor core section 22 that have different areas, and perform an assembly test for each of the electric connection skeletons. If the electric connection skeleton can be successfully installed in the environment of the vehicle body, it is regarded as qualified. Electric connection skeletons 2 of which the cross sectional areas of the first conductor core section 21 and the second conductor core section 22 differ greater than 20%, will interfere with the metal plate or electric devices of the vehicle body when being installed. Therefore, the inventor selects that the cross sectional areas of the first conductor core section 21 and the second conductor core section 22 differ no more than 20%.

In a specific embodiment, at least one of the first conductor core section 21 and the second conductor core section 22 is made of pure aluminum or an aluminum alloy with an aluminum content of 90% or above.

The first conductor core section 21 and the second conductor core section 22 may be made of the same material, and may also be made of different materials. Specifically, the first conductor core section 21 is made of aluminum, the second conductor core section 22 is made of copper, and the first conductor core section 21 and the second conductor core section 22 are connected in the welding manner. More specifically, the first conductor core section 21 and the second conductor core section 22 are both made of pure aluminum or an aluminum alloy with an aluminum content of 90% or above.

In some embodiments, the cross section of the electric connection skeleton is a polygonal shape, and all corners of the polygonal shape are chamfered or rounded. When the electric connection skeleton 2 has an edge, the edge may be chamfered or rounded to prevent the sharp portion from damaging the insulating layer 3.

In some embodiment, a cross sectional area of the electric connection skeleton 2 is 3.5mm² to 240mm². The cross sectional area of the electric connection skeleton 2 determines the current that can be conduct by the electric connection skeleton 2. In general, the current of the electric connection skeleton 2 used for signal conduction is small, and the cross sectional area of the electric connection skeleton 2 is also small. For example, the minimum cross sectional area of the electric connection skeleton 2 used for signal transmission can reach 3.5mm². The current of the electric connection skeleton 2 used for power supply conduction is large and the cross sectional area of the electric connection skeleton 2 is large. Taking a vehicle battery wire harness as an example, the maximum cross sectional area of the electric connection skeleton 2 reaches 240mm².

At least a portion of the electric connection skeleton 2 is a flexible body. The flexible body can ensure that the electric connection skeleton 2 can be bent at a large angle, so that it can be conveniently arranged in the vehicle body with a relatively large corner. Meanwhile, the flexible body can absorb the vibration of the electric connection skeleton 2, so that the vibration of the electric connection skeleton 2 does not affect the connector and the other corresponding electric device on the vehicle body.

Specifically, the first conductor core section 21 is made of a rigid material, and the second conductor core section 22 is made of a flexible material, and the flexible material may be a multi-core cable or a braided cable or a flexible busbar laminated by a plurality of thin plates. The flexible material is easily bendable and has excellent conductivity. The thin plate is soft and easy to deform, and therefore is suitable for use as a flexible conductor. The lamination of the plurality of thin plates can not only ensure the flexibility, but also ensure the efficiency of electrification. The electric connection skeleton is formed by combining and connecting a rigid material with a flexible material, and can better match with the contour of the vehicle body, thereby saving the material and space. Further, the first conductor core section 21 and the second conductor section 22 are both made of a flexible material.

In addition, there is another embodiment in which a portion of the first conductor core section 21 or the second conductor core section 22 is made of a flexible material, and the position where the flexible material is arranged can be set according to the specific installation environment of the first conductor core section 21 or the second conductor core section 22, thus enabling better matching with the contour of the vehicle body and saving the material and space.

In a specific embodiment, the insulating layer is further sequentially sleeved with a shielding layer 31 and an outer insulating layer 32.

The shielding layer 31 can reduce the interference of the electromagnetic radiation generated by the electric connection skeleton 2 to the other electric devices in the vehicle. The material of the shielding layer 31 is a conductor, and it needs to be grounded. Therefore, the insulation layer 3 is arranged between the shielding layer 31 and the electric connection skeleton 2 to prevent contact between the two. The outer insulating layer 32 can prevent the shielding layer 31 from contacting the vehicle shell and causing short circuit.

In a specific embodiment, one of the connectors 1 is a charging socket.

One end of the electric connection skeleton 2 is connected to the charging socket after being connected to a connecting terminal 4, and the connecting terminal 4 provided at the other end of the connector 1 can be connected to a vehicle-mounted battery to form a complete charging system.

The embodiment provides a vehicle, including a vehicle body, an electric device and an electric energy transmission assembly as described above. The connectors 1 are detachably fixed to the vehicle body or the electric device, and the electric connection skeleton 2 is arranged and fixed along the contour of the vehicle body.

Further, a distance from the electric connection skeleton 2 to the vehicle body is greater than or equal to 4.6mm. In the vehicle movement, the electric connection skeleton 2 is likely to interfere with the vehicle body to have abnormal sound. In order to find a suitable distance between the electric connection skeleton 2 and the vehicle body, the inventor carried out tests. The same electric connection skeleton 2 and vehicle body are selected. The distances between the electric connection skeleton 2 and the vehicle body are selected to be different. The electric connection skeleton 2 is swung, and whether it contacts the vehicle body and produces abnormal sound is observed. If abnormal sound is produced, it is unqualified, and the results are recorded in Table 3.

**Table 3: Influence of the distance between the electric connection skeleton 2 and the vehicle body on abnormal sounds**

| Distance between the electric connection skeleton 2 and the vehicle body (mm) | | | | | | | | | |
|---|---|---|---|---|---|---|---|---|---|
| 4 | 4.2 | 4.4 | 4.5 | 4.6 | 4.8 | 5 | 5.5 | 6 | 6.5 |

| Whether there are abnormal sounds | | | | | | | | | |
|---|---|---|---|---|---|---|---|---|---|
| Yes | Yes | Yes | Yes | No | No | No | No | No | No |

From Table 3, it can be seen that when the distance between the electric connection skeleton 2 and the vehicle body is less than 4.6mm, the electric connection skeleton 2 will contact the vehicle body and produces abnormal sounds. Therefore, the inventor selects the distance between the electric connection skeleton 2 and the vehicle body to be greater than or equal to 4.6mm, which can effectively eliminate the occurrence of abnormal sounds.

Although some specific embodiments of the present disclosure have been described in detail by examples, a person skilled in the art should understand that the above examples are for illustrative purposes only and are not intended to limit the scope of the present disclosure. A person skilled in the art should understand that the above embodiments may be modified without departing from the scope and spirit of the present disclosure. The scope of the present disclosure is limited by the attached claims.

## Claims

1. An electric energy transmission assembly, comprising at least one electric connection skeleton and connectors provided at two ends of the electric connection skeleton, wherein the connector comprises a connecting terminal, the two ends of the electric connection skeleton are electrically connected to the connecting terminals, the electric connection skeleton comprises at least two different shapes of cross sections, the electric connection skeleton is sleeved with an insulating layer, and the insulating layer covers an outside of the electric connection skeleton.

2. The electric energy transmission assembly according to claim 1, wherein the electric connection skeleton is connected with the connecting terminal in a welding or crimping manner.

3. The electric energy transmission assembly according to claim 1, wherein the electric connection skeleton is a rigid body, and a tensile strength of the electric connection skeleton is higher than 75MPa.

4. The electric energy transmission assembly according to claim 1, wherein a cross section of the electric connection skeleton is in one or more selected from a circular shape, an oval shape, a rectangular shape, a polygonal shape, A shape, a B shape, a D shape, an M shape, an N shape, an O shape, an S shape, a P shape, an E shape, an F shape, an H shape, a K shape, an L shape, a T shape, a U shape, a V shape, a W shape, an X shape, a Y shape, a Z shape, a semi-arc shape, an arc shape, and a wavy shape.

5. The electric energy transmission assembly according to claim 1, wherein the electric energy transmission assembly further comprises a transition connection section that transitionally connects two different shapes of cross sections of each electric connection skeleton.

6. The electric energy transmission assembly according to claim 5, wherein the electric connection skeleton comprises at least one bent portion, and the transition connection section is located in the bent portion.

7. The electric energy transmission assembly according to claim 1, wherein a difference in cross sectional area between each two different shapes of cross sections of the electric connection skeleton is not more than 20%.

8. The electric energy transmission assembly according to claim 1, wherein the electric connection skeleton at least comprises a first conductor core section and a second conductor core section, and a cross section of the first conductor core section is different from a cross section of the second conductor core section.

9. The electric energy transmission assembly according to claim 8, wherein the first conductor core section is sleeved with a first insulating layer, the second conductor core section is sleeved with a second insulating layer, and the first insulating layer and the second insulating layer are connected in a fusion or welding or foaming or injection molding or bonding or spraying or plastic dipping manner.

10. The electric energy transmission assembly according to claim 8, wherein the first conductor core section and the second conductor core section are connected in a welding or crimping manner.

11. The electric energy transmission assembly according to claim 8, wherein a difference in cross sectional area between the first conductor core section and the second conductor core section is not more than 20%.

12. The electric energy transmission assembly according to claim 1, wherein a cross section of the electric connection skeleton is a polygonal shape, and all corners of the polygonal shape are chamfered or rounded.

13. The electric energy transmission assembly according to claim 1, wherein a cross sectional area of the electric connection skeleton is 3.5mm² to 240mm².

14. The electric energy transmission assembly according to claim 1, wherein at least a portion of the electric connection skeleton is flexible.

15. The electric energy transmission assembly according to claim 1, wherein the insulating layer is further sequentially sleeved with a shielding layer and an outer insulating layer.

16. The electric energy transmission assembly according to claim 1, wherein one of the connectors is a charging socket.

17. A vehicle, wherein the vehicle comprises a vehicle body, an electric device and an electric energy transmission assembly according to any one of claims 1 to 16, the electric energy transmission assembly is detachably fixed to the vehicle body or the electric device, and the electric connection skeleton is arranged and fixed along a contour of the vehicle body.

18. The electric energy transmission assembly according to claim 17, wherein a distance from the electric connection skeleton to the vehicle body is greater than or equal to 4.6mm.
